# EUROPÄISCHE PATENTSCHRIFT

(11) **EP 2 194 009 B1**
(45) Veröffentlichungstag und Bekanntmachung des Hinweises auf die Patenterteilung: **20.03.2013**
(21) Anmeldenummer: 09175709.6
(22) Anmeldetag: 11.11.2009
(51) Int. Cl.: B65G 47/08, B65G 47/26, B65G 47/28, B65G 47/29

(54) **Vorrichtung und Verfahren zum Gruppieren von Artikeln**
Device and method for grouping items
Procédé et dispositif destinés au groupement d'articles

(30) Priorität: 06.12.2008 DE 102008060846
(43) Veröffentlichungstag der Anmeldung: 09.06.2010
(73) Patentinhaber: Krones AG, 93073 Neutraubling (DE)
(72) Erfinder: Semmelrock, Albin, 83064, Raubling (DE); Druml, Johann, 83071, Stephanskirchen (DE)
(74) Vertreter: Benninger, Johannes

(56) Entgegenhaltungen:
- FR-A1- 2 688 470
- GB-A- 2 013 599
- JP-A- 2007 230 751
- US-A- 3 805 478
- US-A1- 2004 050 663

## Beschreibung

Die Erfindung betrifft ein Verfahren zum Gruppieren von Artikeln mit den Merkmalen des Oberbegriffs des unabhängigen Anspruchs 1. Die Erfindung betrifft weiterhin eine Vorrichtung zum Gruppieren von Artikeln mit den Merkmalen des Oberbegriffs des unabhängigen Anspruchs 9.

Derartige Gruppierungs- bzw. Vereinzelungsvorrichtungen werden bspw. im Zulaufbereich von Verpackungsmaschinen verwendet, die Getränkeflachen in Kartons oder Flaschenkästen einsetzen. Die zur Aufnahme der Getränkeflaschen vorgesehenen quaderförmigen Transportbehälter werden in der Regel in einer geschlossenen, d.h. lückenlosen Reihe ohne Zwischenabstände zugeführt. Die in Förderrichtung sowie die in Gegenrichtung weisenden planparallelen Seitenflächen der quaderförmigen Transportbehälter berühren einander unmittelbar. Unabhängig davon, ob die zu versorgende Verpackungsmaschine taktweise oder kontinuierlich arbeitet, müssen die der Maschine zulaufenden Behälter in Transportrichtung entweder einzeln oder zumindest gruppenweise auf definierte Abstände gebracht werden.

Zu diesem Zweck können beispielsweise von unten in die Transportbahn gesteuert einführbare Trennrollen, Stößel oder dgl. eingesetzt werden, die mit einem der Behälter an seiner Unterseite in Eingriff gelangen und diesen um ein bestimmtes Maß von der Förderebene weg nach oben anheben. Auf diese Weise wird eine Lücke geschaffen, um entweder mit der Rückseite des voraus laufenden Behälters oder der Vorderseite des nachlaufenden Behälters ein Eingriff zu gelangen, so dass ein voraus laufender Behälter beschleunigt bzw. ein nachfolgender Behälter abgebremst werden kann, wodurch eine Vereinzelung oder Gruppierung von Behältern durch eine Abstandsvergrößerung in Transportrichtung herbeiführbar ist. Im weiteren Verlauf werden die Trennrollen oder Stößel aus der Transportbahn nach unten in eine Position gebracht, bei der sie aus dem Eingriff mit den Behältern gelangen. Allerdings führen diese bekannten Einteil- bzw. Gruppierungsmechanismen zu einer Beunruhigung des Behälterzulaufs und können zudem eine erhebliche Geräuschentwicklung mit sich bringen. Weiterhin werden die Behälter mechanisch relativ stark beansprucht, so dass diese in ungünstigen Fällen sogar beschädigt werden können.

Vorrichtungen, bei denen zum Vereinzeln oder Gruppieren von quaderförmigen Artikeln eine zur Transportebene senkrechte Hubbewegung der Gegenstände ausgeführt wird, sind weiterhin aus der DE 25 40 985 A1, aus der DE 28 50 456 A1, aus der DE 39 38 548 A1 sowie aus der DE 41 14 475 A1 bekannt.

Aus der EP1 918 226 A1 ist weiterhin eine gattungsgemäße Vorrichtung und ein gattungsgemäßes Verfahren zum Gruppieren oder Vereinzeln von quaderförmigen Artikeln bekannt, bei der diese in wenigstens einer geschlossenen Reihe auf einem Förderer in einer Transportebene transportiert und zum Weiterbehandeln einzeln oder gruppenweise beabstandet werden. Parallel zur Transportrichtung ist ein Element derart in die Transportbahn der Artikel einführbar, dass ein Artikel während seiner Vorwärtsbewegung längs zur Transportrichtung von dem Element geringfügig seitlich in der Transportebene verlagert wird, und das Element für einen in Transportrichtung folgenden, benachbarten Artikel eine längs zur Transportbahn wirksame Anlagefläche bildet. Zwar erfüllt eine derartige Vereinzelungs- bzw. Gruppiervorrichtung die meisten Anforderungen hinsichtlich einer zuverlässigen Vereinzelung, einer schonenden Behandlung der Artikel und eines ruhigen Maschinenlaufs. Allerdings konnte festgestellt werden, dass die gruppierten Artikel teilweise nicht in gewünschter Weise lückenlos weiterbefördert werden, sondern dass insbesondere der in Transportrichtung letzte Artikel der vereinzelten Gruppe aufgrund seiner seitlichen Verschiebung und anschließenden Zurückbewegung in eine fluchtende Linie mit den voraus laufenden Artikeln dazu neigt, geringfügig gegenüber der Auflagefläche der Transportvorrichtung verzögert zu werden. Dadurch kommt es zu immer wieder auftretenden Ablösungen einzelner Artikel von der ansonsten lückenlos nacheinander geförderten Gruppe.

Die FR 2 688 470 A1 offenbart ein Verfahren zum Verpacken von Gegenständen, beispielsweise von Getränkeflaschen. Hierbei werden diese vor einem Verpackungsvorgang in Gruppen unterteilt, indem die Getränkeflaschen hierfür von einem Transportband auf eine Transportkette laufen, die oben und untenliegende Abteilvorrichtungen aufweist. Die Abteilvorrichtungen sind durch Segmente ausgestaltet, die zwischen die verbleibenden Zwischenräume der einzelnen Gegenstände eingefahren werden und hierin für eine Geschwindigkeitsdifferenz sorgen können. Anschließend werden zwei Stützstäbe von oben hinter und seitlich vor die jeweiligen Flaschengruppen eingebracht und hierdurch abgestützt. Über einen Anschlag, der abwechselnd an den Stützstäben angebracht ist, werden die Flaschen gegeneinander verschoben und anschließend durch die Verpackungsstation gefahren.

Ein Ziel der vorliegenden Erfindung besteht darin, ein Verfahren und eine Vorrichtung zum Gruppieren von Artikeln derart weiterzubilden, dass die Gefahr eines Ablösens einzelner der gruppierten Artikel unter Ausbildung von Abständen zwischen den Artikeln reduziert und minimiert wird.

Dieses Ziel der Erfindung wird mit den Gegenständen der unabhängigen Ansprüche erreicht. Merkmale vorteilhafter Weiterbildungen der Erfindung ergeben sich aus den abhängigen Ansprüchen.

Die Erfindung umfasst eine Vorrichtung sowie ein entsprechendes Verfahren zum Gruppieren von Artikeln, die in wenigstens einer geschlossenen Reihe auf einer Fördereinrichtung in einer Transportebene transportiert und zum Weiterbehandeln gruppenweise beabstandet werden, wobei parallel zur Transportrichtung wenigstens eine Trenneinheit auf eine Weise in die Transportbahn der Artikel einführbar ist, dass ein mit der Trenneinheit erfasster Artikel sowie die sich daran anschließenden weiteren Artikel während ihrer Vorwärtsbewegung längs zur Transportrichtung von der Trenneinheit wenigstens geringfügig verzögert werden. Gemäß der vorliegenden Erfindung ist vorgesehen, dass die Trenneinheit durch wenigstens zwei Trennelemente gebildet ist, die den in Transportrichtung zuvorderst angeordneten Artikel an mindestens zwei Seiten umgreifen und in seiner Position in Bezug auf die Transportebene der sich mit den darauf stehenden Artikeln bewegenden Fördereinrichtung fixieren und/oder verzögern. Neben den bereits aus dem Stand der Technik bekannten Einteilfingern umfasst die Trenneinheit gemäß der vorliegenden Erfindung mindestens einen zweiten Einteilfinger, der in Transportrichtung hinter dem ersten Trennelement bzw. Einteilfinger in die Transportbahn der Artikel einführbar ist. Im vorliegenden Zusammenhang der Beschreibung werden die Trennelemente der Trenneinheit meist als Halteelement sowie als Zentrierelement bezeichnet.

Es hat sich bei bekannten Gruppierungsvorrichtungen und Verfahren in der Praxis gezeigt, dass eine Ablösung einzelner Artikel einer Gruppe nicht zuverlässig ausgeschlossen werden kann. Werden mehrere Artikel gruppiert, so ist es wichtig, dass die Abstände der Artikel untereinander innerhalb ihrer Gruppe minimiert sind und sich weder verändern noch im Zeitverlauf differieren. In der Praxis hat sich jedoch erwiesen, dass die Verwendung nur eines Trennelementes bzw. nur eines Einteilfingers zur Gruppierung, das/der in erster Linie dazu dient, nach einer Gruppe von zwei, drei oder mehr Artikeln in den Artikelstrom einzugreifen und den nachfolgenden Artikelstrom leicht zu verzögern, nicht immer zu befriedigenden Ergebnissen führt, da ohne weitere Maßnahmen nicht zuverlässig ausgeschlossen werden kann, dass sich die gruppierten Artikel, die keine zusätzliche Führung mehr erfahren, zumindest geringfügig voneinander lösen.

Dieses Problem tritt insbesondere bei solchen Gruppierstationen auf, bei denen die Gruppierung durch seitliches Eingreifen eines Trennelementes in den ununterbrochenen Artikelstrom unter gleichzeitigem leichten seitlichem Verschieben zumindest eines Artikels erfolgt, da bei der Rückverschiebung dieses Artikels mittels geeigneter Leiteinrichtungen eine nicht zu vermeidende Reibungskomponente entgegen dem Artikelstrom auftritt, die insbesondere bei der seitlichen Verschiebung des hintersten einer Gruppe von Artikeln dazu führen kann, dass dieser hinterste Artikel leicht von der Gruppe abgelöst werden kann. Eine Gruppe von Artikeln, die unregelmäßige Abstände aufweist, kann zu Problemen und Unregelmäßigkeiten bei nachfolgenden Weiterbehandlungsschritten führen, bspw. bei Verpackungsstationen.

Wenn im vorliegenden Zusammenhang allgemein von Artikeln die Rede ist, so können damit quaderförmige Artikel aller Art, jedoch bspw. auch Getränkebehälter, Flaschen o. dgl. gemeint sein. Diese Artikel sind vorzugsweise alle gleichartig und von gleichen Abmessungen und gleicher Größe, damit sie problemlos in Gruppen gleichartiger Artikel, Flaschen o. dgl. zusammengefasst werden können. Besonders geeignet sind quaderförmige Flaschen mit abgerundeten Seitenkanten, da die dadurch gebildeten Geometrien eine besonders exakte Einteilung mittels der erfindungsgemäßen Vorrichtung ermöglichen.

Das erste Trennelement bzw. Halteelement kann insbesondere für den in Transportrichtung an vorderster Stelle liegenden ersten Artikel einer Anzahl von gruppierten Artikeln eine längs zur Transportbahn wirksame Anlagefläche bilden. Zudem kann bei dieser Konfiguration das zweite Trennelement bzw. Zentrierelement für denselben Artikel einer Anzahl von gruppierten Artikeln eine quer zur Transportbahn wirksame Anlagefläche bilden. Dadurch, dass die Trenneinheit mit dem durch diese fixierten ersten Artikel gegenüber dem Transportband leicht verzögert bewegt werden kann, wird jederzeit zuverlässig der Zusammenhalt der gebildeten Gruppe von Artikeln gewährleistet und das Ablösen einzelner Artikel in oder entgegen der Transportrichtung verhindert werden.

Das Halte- und das Zentrierelement bzw. die ersten und zweiten Trennelemente sind vorzugsweise auf einem gemeinsamen Trägerelement fixiert, das jederzeit in definierter Beziehung zum Transportband bewegt wird, um zu einer gleichmäßigen Einteilung und Gruppierung der Artikel zu gelangen. Die Elemente sind normalerweise nicht untereinander beweglich angeordnet, sondern in starrer räumlicher Anordnung auf dem gemeinsamen Trägerelement montiert. Zudem hängen die Kontur und der Querschnitt dieser Elemente von der Form der zu gruppierenden Artikel ab. Bspw. weisen die Elemente eine leichte Rundung auf, wenn es sich um Runde Flaschen oder Artikel handelt. Bei quadratischen Flaschen oder Artikeln weisen die Elemente eine eher ebene Fläche auf. Das Trägerelement mit der Trenneinheit wird üblicherweise beim Eingreifen in den Artikelstrom von unterhalb der Transportbahn und mit Wesentlichen senkrecht zur Transportrichtung nach oben zwischen benachbarte Artikel eingeschoben. Das Halteelement bzw. erste Trennelement kann wahlweise seitlich an eine Behälterwand des Artikels angreifen. Wahlweise kann es auch in einen Spalt zwischen zwei Behälter bzw. Artikel eingreifen.

Bei einer bevorzugten Ausführungsform der erfindungsgemäßen Vorrichtung weisen das erste Trennelement und das zweite Trennelement jeweils zumindest zeitweise gegenüber der Transportbahn verzögerte Bewegungsbahnen auf. Zudem kann die Trenneinheit zumindest kurzzeitig eine gegenüber der Transportbahn beschleunigte Bewegungsbahn aufweisen. Auf diese Weise ist es möglich, eine Gruppe von gruppierten Artikeln mittels der Trenneinheit in Transportrichtung zumindest zu verzögern, während kurzzeitig über die Fördergeschwindigkeit der Transportbahn zu beschleunigen und damit von der mittels des zweiten Trennelementes nachfolgenden zweiten Gruppe von gruppierten Artikeln zu separieren. Auch dies sorgt für eine zuverlässige Gruppierung ohne Abstände der Artikel einer Gruppe untereinander.

Dadurch, dass die Trenneinheit zumindest temporär gegenüber der Transportgeschwindigkeit des Förderbandes verzögert ist, werden die Artikel daran gestaut. Erst nach einiger Zeit, kurz vor dem Abtauchen der Trenneinheit nach unten, werden die Trennelemente beschleunigt, wodurch der bremsende Effekt für die Artikel entfällt, so dass das Transportband die Artikel ebenfalls beschleunigen kann. Auf diese Weise werden die gewünschten Einteilabstände erzeugt. Die Trenneinheit ist so ausgebildet, dass der mit ihr gegenüber der Transportbahn verzögerte Artikel solange gebremst wird, bis die Trenneinheit beschleunigt und schließlich nach unten aus dem Eingriff mit dem ersten Artikel einer Artikelgruppe von mindestens zwei aneinander stehenden Artikeln gebracht wird.

Eine alternative Ausführungsvariante der erfindungsgemäßen Vorrichtung ist derart konfiguriert, dass das Halteelement bzw. erste Trennelement für die erste Gruppe an gruppierten Artikeln eine längs zur Transportrichtung wirksame Anlagefläche bildet, während das in Transportrichtung vor dem ersten Trennelement angeordnete Zentrierelement bzw. zweite Trennelement eine vordere Anlagefläche für die erste Gruppe der Artikel bildet. Bei dieser Anordnung ist das Zentrierelement gegenüber dem ersten Trennelement zumindest geringfügig verzögerbar. Auch mit einer solchen alternativen Anordnung kann gleichermaßen die Ablösung einzelner Artikel verhindert werden, da durch das Verzögern der gesamten Gruppe gegenüber dem Transportband eventuell bereits abgelöste Artikel wieder auf die Gruppe auflaufen und ggf. bereits entstandene Abstände wieder geschlossen werden.

Eine weitere Ausführungsvariante sieht vor, dass das Halteelement derart parallel zur Transportrichtung in die Transportbahn der Artikel einführbar ist, dass ein Artikel während seiner Vorwärtsbewegung längs zur Transportrichtung von dem Trennelement wenigstens geringfügig seitlich in der Transportebene verlagert wird. Hierdurch ist die problemlose Einführung des Trennelements auch in einen ununterbrochenen Artikelstrom ermöglicht. Bei Flaschen als Artikeln kann das Trenn- bzw. Halteelement zwar auch ohne seitlichen Versatz eingeschoben werden, doch bei quaderförmigen Artikeln kann eine seitliche Verschiebung gemäß der beschriebenen Ausführungsvariante notwendig und sinnvoll sein.

Wahlweise können das erste Trennelement und/oder das zweite Trennelement von unterhalb der Transportbahn nach oben zwischen benachbarte Artikel einschiebbar sein. Zudem kann vorgesehen sein, dass das erste und/oder das zweite Trennelement jeweils im Wesentlichen senkrecht zur Transportebene in die Transportbahn der Artikel einführbar sind. Vorzugsweise sind die ersten und zweiten Trennelemente in ihren Bewegungsbahnen miteinander gekoppelt. Zudem kann vorgesehen sein, dass die ersten und zweiten Trennelemente in ihren Bewegungsbahnen miteinander synchronisiert sind. Die Trennelemente können insbesondere mit ihrer Montage auf einem gemeinsamen Trägerbauteil eine starre Trenneinheit bilden, die als Ganzes bewegt wird. Weiterhin ist es sinnvoll, die ersten und zweiten Trennelemente zeitversetzt zueinander in Eingriff mit den auf der Fördereinrichtung bewegten Artikeln zu bringen. So kann das zweite Trennelement zeitlich versetzt nach dem ersten Element in Eingriff mit den auf der Fördereinrichtung bewegten Artikeln gebracht werden. Selbstverständlich ist zudem eine Synchronisation der Bewegungsbahnen der Trennelemente mit der Transportbewegung der Transportvorrichtung sinnvoll und notwendig, da ansonsten keine sinnvolle Gruppierung zu gewährleisten ist.

Die vorliegende Erfindung betrifft gleichermaßen ein Verfahren zum Gruppieren von Artikeln, die in wenigstens einer geschlossenen Reihe auf einer Fördereinrichtung in einer Transportebene transportiert und zum Weiterbehandeln gruppenweise beabstandet werden. Die bereits zuvor anhand der erfindungsgemäßen Vorrichtung erläuterten Varianten und deren Besonderheiten beziehen sich gleichermaßen auf das erfindungsgemäße Gruppierverfahren, bei dem parallel zur Transportrichtung wenigstens eine Trenneinheit so in die Transportbahn der Artikel eingeführt wird, dass ein an die Trenneinheit grenzender Artikel sowie die sich daran anschließenden weiteren Artikel während ihrer Vorwärtsbewegung längs zur Transportrichtung von der Trenneinheit wenigstens geringfügig verzögert werden. Die Trenneinheit wird durch zwei oder mehr Trennelemente gebildet, die den in Transportrichtung zuvorderst angeordneten Artikel an mindestens zwei Seiten umgreifen und in seiner Position in Bezug auf die Transportebene der sich bewegenden Fördereinrichtung fixieren. Wie bereits erwähnt, werden diese Trennelemente im vorliegenden Zusammenhang auch als Halteelement und als Zentrierelement bezeichnet.

Eine erste von mehreren Trenneinheiten kann dabei mit ihrem ersten Trennelement für den in Transportrichtung an vorderster Stelle liegenden ersten Artikel einer Anzahl von gruppierten Artikeln eine längs zur Transportbahn wirksame Anlagefläche bilden. Zudem kann das zweite Trennelement für denselben Artikel eine quer zur Transportbahn wirksame Anlagefläche bilden. Vorzugsweise wird die Trenneinheit mit dem ersten und zweiten Trennelement zumindest zeitweise gegenüber der Transportbahn verzögert. Eine weitere Trenneinheit bildet wiederum für eine folgende Gruppe von Artikeln eine entsprechende Anlagefläche, indem der jeweils erste Artikel der Gruppe mittels der beiden Trennelemente fixiert und gegenüber dem etwas schneller laufenden Transportband leicht verzögert wird.

Dadurch, dass die erste Trenneinheit zumindest kurzzeitig gegenüber der Transportbahn beschleunigt wird, bevor es aus dem Eingriff mit dem ersten Artikel der ersten Gruppe gebracht wird, wird diese erste Gruppe durch das schneller laufende Transportband gegenüber der folgenden, mittels der nächsten Trenneinheit am Beschleunigen gehinderte Gruppe von Artikeln beschleunigt, wodurch der gewünschte Einteilabstand zwischen den Artikelgruppen gebildet wird.

Eine Variante des erfindungsgemäßen Verfahrens sieht vor, dass das erste und/oder das zweite Trennelement derart parallel zur Transportrichtung in die Transportbahn der Artikel eingeführt wird, dass ein Artikel während seiner Vorwärtsbewegung längs zur Transportrichtung von dem Trennelement wenigstens geringfügig seitlich in der Transportebene verlagert wird. Die Trenneinheit mit dem ersten Trennelement und dem zweiten Trennelement können von unterhalb der Transportbahn nach oben zwischen benachbarte Artikel eingeschoben werden.

Eine weitere alternative Variante des erfindungsgemäßen Gruppierverfahrens sieht eine seitliche Verschiebung einer Flasche mittels eines ersten Halteelements unter gleichzeitiger leichter Verzögerung des nachfolgenden Artikelstroms mit dem als Flaschenanlagefläche fungierenden Halteelement vor, wie dies in der europäischen Patentanmeldung EP 1 918 226 A1 detailliert beschrieben ist. Im Unterschied zur dort offenbarten Gruppiervorrichtung weist jedoch die erfindungsgemäße Vorrichtung mindestens ein weiteres Halteelement auf, das bei dieser alternativen Ausführungsvariante vor die vom nachfolgenden Artikelstrom abgetrennte erste Gruppe von Artikeln oder Flaschen greift und diese geringfügig gegenüber dem mit unveränderter Geschwindigkeit weiter laufenden Transportband verzögert.

Das zweite Halteelement bildet somit eine vordere Anlagefläche für die erste Gruppe von Artikeln oder Flaschen, verzögert diese leicht und kann dadurch Lücken schließen, die unter Umständen durch das seitliche Verschieben der hintersten Flasche dieser ersten Gruppe entstanden sein können. Solche Lücken können durch das seitliche Verschieben und das nachfolgende Zurückführen der seitlich verschobenen hinteren Flasche der Gruppe in die Flucht der geförderten Flaschen entstehen, da durch die Leit- bzw.

Rückführeinrichtung eine Reibungskomponente auf die zurückgeführte Flasche wirkt, die der Transportrichtung entgegen wirkt. Das zusätzlich eingreifende und die vorderen Flaschen der Gruppe verzögernde zweite Trenn- bzw. Halteelement behebt dieses Problem und sorgt für einen lückenlosen Transport aller gruppierten Artikel innerhalb der jeweiligen Gruppe. Selbstverständlich kann das temporär eingeführte zweite Trenn- oder Halteelement bereits nach kurzer Zeit wieder aus dem Artikelstrom entnommen werden.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.

Fig. 1 zeigt schematisch ein Ausführungsbeispiel einer Gruppiervorrichtung zum Gruppieren von Flaschen anhand eines ersten Verfahrensschrittes.

Fig. 2 zeigt einen weiteren Verfahrensschritt beim Gruppieren von Flaschen, die auf einer horizontalen Transportbahn in einer geschlossenen Reihe gefördert werden.

Fig. 3 zeigt einen dritten Verfahrensschritt beim Gruppieren von Flaschen.

Fig. 4 zeigt einen vierten Verfahrensschritt beim Gruppieren von Flaschen.

Fig. 5 zeigt einen fünften Verfahrensschritt der Gruppiervorrichtung mit zu Gruppen zusammengefassten Flaschen.

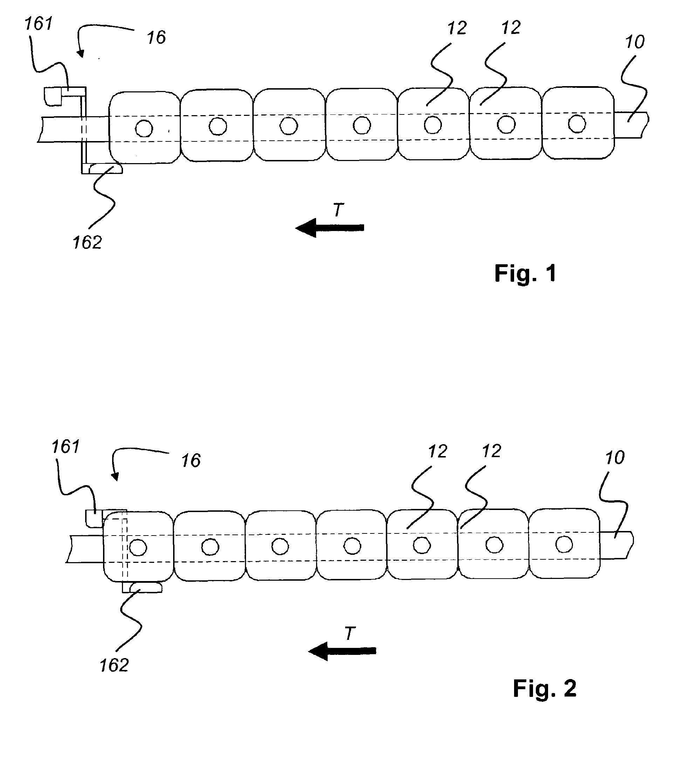

Anhand der schematischen Darstellungen der Figuren 1 bis 5 wird die Funktionsweise einer erfindungsgemäßen Vorrichtung zur Gruppierung von Artikeln am Beispiel der Gruppierung von Getränkebehältern bzw. Flaschen sowie die Verfahrensschritte bei einer solchen Gruppierung näher erläutert.

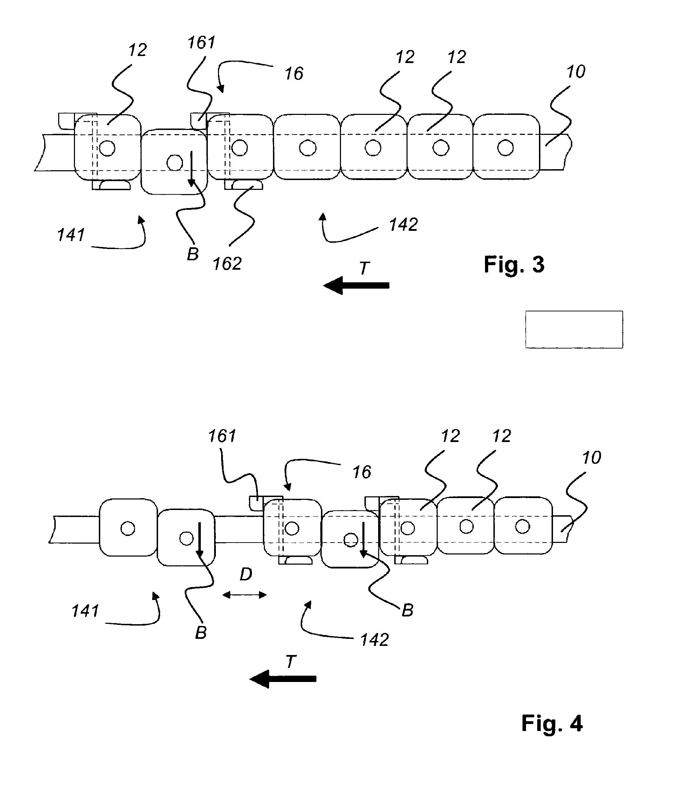

Auf einem Transportband 10 wird eine ununterbrochene Reihe von Flaschen 12 in Transportrichtung T befördert (vgl. Fig. 1). Zur Weiterverarbeitung der Flaschen 12, bspw. zu deren Verpackung in einer nachfolgenden Packstation kann es notwendig sein, diese zu gruppieren. Bei der Gruppierung werden die zunächst reihenweise und ohne Zwischenräume hintereinander auf dem Transportband 10 beförderten Flaschen 12 in Gruppen 14 von jeweils zwei Flaschen 12 unterteilt (vgl. Fig. 3), die von einer darauf folgenden Gruppe 14 von weiteren zwei Flaschen 12 um einen definierten Abstand D abgerückt wird (vgl. Fig. 4). Die Gruppierung der Flaschen 12 können auch in Gruppen 14 unterteilt werden, welche mehr als zwei Flaschen 12 aufweisen (nicht dargestellt). Die Gruppierung erfolgt mit Hilfe mehrerer Trenneinheiten 16, die senkrecht von unterhalb des Transportbandes 10 in regelmäßigen Abständen zwischen die Flaschen 12 eingreifen und auf diese Weise die Gruppen 14 bilden.

In der Darstellung der Fig. 1 bilden die Flaschen 12 eine ununterbrochene Reihe auf dem Transportband 10, wobei ein Halteelement 161 der Trenneinheit 16 an vorderster Stelle, vor der ersten Flasche 12 der Reihe auftaucht und unmittelbar danach ein Zentrierelement 162 von unten auftaucht. Diese Elemente 161, 162 bilden zusammen die Trenneinheit 16. Anhand der Darstellungen der Fig. 2 ist zu erkennen, dass das Halteelement 161 die erste Flasche 12 hält, während ein Zentrierelement 162 diese Flasche 12 in ihrer Laufrichtung zentriert.

In der Fig. 3 ist zu erkennen, dass nach dem Passieren von zwei Flaschen 12, die eine erste Gruppe 141 bilden, eine zweite Trenneinheit 16 von unten her zwischen zwei eng beabstandete Flaschen 12 eingreift. Durch das Auftauchen des Halteelements 161 der zweiten Trenneinheit 16 wird die letzte Flasche 12 der Gruppe 141 in Bewegungsrichtung B verschoben. Diese Verschiebung wird dadurch ermöglicht, dass das Halteelement 161 mit einer nach oben spitz zulaufenden und dadurch gegenüber der Flasche abgeschrägten Fläche von unten auftaucht und die letzte Flasche 12 der Gruppe 141 um die Breite des Halteelements 161 verschoben wird. Nachdem das Halteelement 161 aufgetaucht ist, bildet es eine Anlagefläche für die erste Flasche 12 einer zweiten Gruppe 142 von Flaschen 12. Die Flaschen 12 werden bei diesen Vorgängen weiterhin von dem sich mit konstanter Geschwindigkeit in Transportrichtung T bewegenden Transportband 10 befördert, jedoch wird durch das Auftauchen der Trenneinheiten 16 die Geschwindigkeit des Flaschenstroms verzögert. In diesem Zusammenhang kann es sinnvoll sein, wenn sich die Trenneinheiten 16 über weite Bereiche ihres Eingriffs mit den Flaschen 12 mit geringfügig geringerer Geschwindigkeit bewegen als das Transportband 10, weil dadurch die Flaschen 12 innerhalb der jeweiligen Gruppen 14 permanent gegeneinander geschoben werden, so dass jederzeit sichergestellt werden kann, dass die Flaschen 12 innerhalb der jeweiligen Gruppen 14 keinen Abstand voneinander aufweisen.

Die Oberfläche des Transportbandes 10 ist vorzugsweise so ausgestaltet, dass die Flaschen 12 darauf problemlos gleiten und damit durch die Trenneinheiten 16 verzögert werden können. Andererseits sollen die Flaschen 12 beim Abtauchen der Trenneinheiten 16 nach unten ohne nennenswerte Verzögerung und weitgehend schlupffrei auf die Transportgeschwindigkeit des Transportbandes 10 beschleunigt werden.

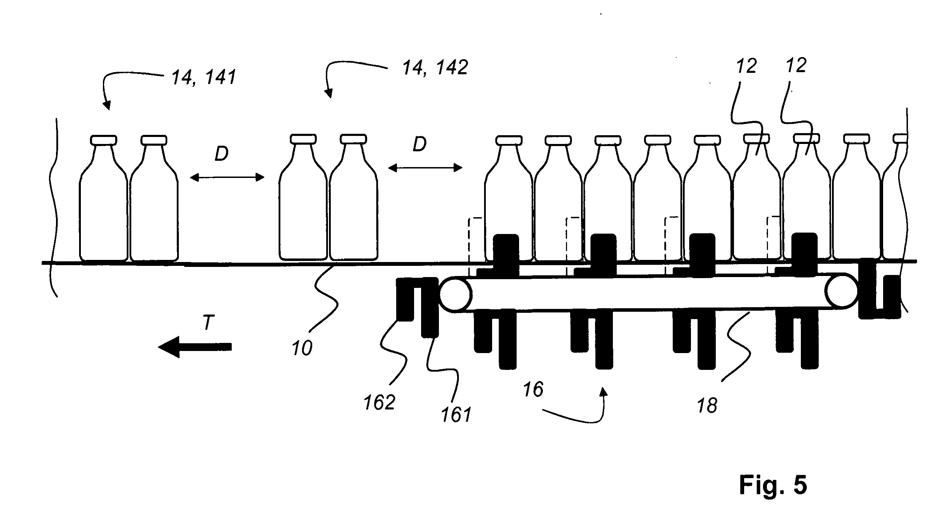

Die schematische Darstellung der Fig. 4 verdeutlicht die Ablösung der in Transportrichtung T vordersten ersten Gruppe 141 von Flaschen 12 von der nachfolgenden zweiten Gruppe 142 um einen definierten Abstand D, der durch das Abtauchen der Trenneinheiten 16 hergestellt wird. Während des Abtauchens der Trenneinheiten 16 nimmt die vorderste erste Gruppe 141 von Flaschen 12 wieder die Geschwindigkeit des Transportbandes 10 auf. Um dies zu erreichen, wird im gezeigten Ausführungsbeispiel das Halteelement 161 kurz vor seinem Zurückziehen unter das Niveau des Transportbandes 10 durch Verschwenken nach vorne zumindest mit seiner oberen Spitze über die Transportgeschwindigkeit des Transportbandes 10 sowie der übrigen Trennelemente 16 beschleunigt und passt dadurch die Geschwindigkeit des vordersten Gruppe 141 von Flaschen 12 wieder der Geschwindigkeit des Transportbandes 10 an. Somit entsteht der definierte Abstand D in Transportrichtung T. Wie in Fig. 5 erkennbar, erhalten auf die gezeigte Weise alle Gruppen 14 den gewünschten Zwischenabstand D, der sie einer Weiterverarbeitung, bspw. einer Verpackung zu Gebinden von mehreren Flaschen 12, leichter zugänglich macht.

Wie weiterhin aus der Figur 5 deutlich wird, tauchen die Trenneinheiten 16 weitgehend senkrecht zur Transportrichtung T von unterhalb des Transportbandes 10 über dessen Niveau und zwischen die einzelnen Flaschen 12, so dass bei diesem Eintauchen keine nennenswerte Verschiebung der Gruppen 14 voneinander erfolgt. Dieses senkrechte Eintauchen von unten kann bspw. durch eine geeignete gelenkige Lagerung der Trenneinheiten 16 an einem mit konstanter Geschwindigkeit umlaufenden Endlos-Zugmittel 18 und einer geeigneten zusätzlichen Führung der Trenneinheiten 16 gewährleistet werden, die für ein gewünschtes Verschwenken der Trenneinheiten 16 während ihrer Bewegung sowie für die gewünschte Beschleunigung der Trenneinheiten 16 kurz vor deren Abtauchen sorgen kann. Die Umlaufgeschwindigkeit des Zugmittels 18 ist so auf die Transportgeschwindigkeit des Transportbandes 10 abzustimmen, dass die gewünschten Gruppierungen der Flaschen 12 erfolgen können.

Wahlweise können mehr als zwei Trenneinheiten 16 gleichzeitig im Eingriff mit den Flaschen 12 stehen, wie dies in den Figuren 4 und 5 angedeutet ist. Für die Gruppierung und die Herstellung des gewünschten Abstandes D reicht es jedoch aus, wenn ein Halteelemente 161 und ein Zentrierelement 162 gleichzeitig in Eingriff mit den Flaschen 12 stehen.

Der besondere Vorteil der beschriebenen Gruppierung mittels mindestens zwei Trenneinheiten 16, besteht darin, dass sich die Flaschen 12 einer Gruppe 14 nicht voneinander lösen können, da sie zumindest von den beiden sie begrenzenden Trenneinheiten 16 ohne Abstand voneinander zusammen gehalten, vorzugsweise jedoch gleichzeitig mittels der etwas langsamer als das Transportband 10 laufenden Trenneinheiten 16 gegenüber dem Transportband 10 leicht verzögert und dadurch permanent zusammen geschoben werden.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

## Patentansprüche

1. Verfahren zum Gruppieren von Artikeln, die in wenigstens einer geschlossenen Reihe auf einer Fördereinrichtung in einer Transportebene transportiert und zum Weiterbehandeln gruppenweise beabstandet werden, wobei parallel zur Transportrichtung (T) wenigstens eine Trenneinheit (16) derart in die Transportbahn der Artikel eingeführt wird und eingreift, dass ein mit der Trenneinheit (16) erfasster Artikel sowie die sich daran anschließenden weiteren Artikel während ihrer Vorwärtsbewegung längs zur Transportrichtung (T) von der Trenneinheit (16) wenigstens geringfügig verzögert werden, **dadurch gekennzeichnet, dass** die Trenneinheit (16) durch wenigstens zwei Elemente (161, 162) gebildet wird, die den in Transportrichtung (T) zuvorderst angeordneten Artikel an mindestens zwei Seiten umgreifen und in seiner Position in Bezug auf die Transportebene der sich bewegenden Fördereinrichtung fixieren.

2. Verfahren nach Anspruch 1, **dadurch gekennzeichnet, dass** ein Halteelement (161) für den in Transportrichtung (T) an vorderster Stelle liegenden ersten Artikel einer Anzahl von gruppierten Artikeln eine längs zur Transportbahn wirksame Anlagefläche bildet, und dass ein Zentrierelement (162) für denselben Artikel eine quer zur Transportbahn wirksame Anlagefläche bildet.

3. Verfahren nach Anspruch 2, **dadurch gekennzeichnet, dass** die Trenneinheit (16) mit dem Halteelement (161) und dem Zentrierelement (162) von unterhalb der Transportbahn und im Wesentlichen senkrecht zur Transportbahn nach oben zwischen benachbarte Artikel eingeführt wird.

4. Verfahren nach einem der Ansprüche 1 bis 3, **dadurch gekennzeichnet, dass** die Trenneinheit (16) gegenüber der Transportbahn zumindest abschnittsweise verzögert bewegt wird.

5. Verfahren nach einem der Ansprüche 1 bis 4, **dadurch gekennzeichnet, dass** die Trenneinheit (16) zumindest kurzzeitig gegenüber der Transportbahn beschleunigt und schneller als diese bewegt wird.

6. Verfahren nach einem der Ansprüche 1 bis 5, **dadurch gekennzeichnet, dass** eine erste Gruppe (141) von gruppierten Artikeln mittels der ersten Trenneinheit (16) in Transportrichtung (T) zumindest kurzzeitig über die Fördergeschwindigkeit der Transportbahn beschleunigt und von der mittels einer nachfolgenden zweiten Trenneinheit (16) nachfolgenden zweiten Gruppe (142) von gruppierten Artikeln separiert wird.

7. Verfahren nach einem der Ansprüche 1 bis 6, bei welchem durch ein Auftauchen eines Halteelements (161) einer zweiten Trenneinheit (16) der letzte Artikel einer Gruppe von Artikeln (141) in eine Bewegungsrichtung (B) verschoben wird.

8. Verfahren nach Anspruch 7, bei welchem nach Auftauchen das Halteelement (161) eine Anlagefläche für einen ersten Artikel einer zweiten Gruppe (142) von Artikeln bildet.

9. Vorrichtung zum Gruppieren von Artikeln, die in wenigstens einer geschlossenen Reihe auf einer Fördereinrichtung in einer Transportebene transportiert und zum Weiterbehandeln gruppenweise beabstandet werden, wobei parallel zur Transportrichtung (T) wenigstens eine Trenneinheit (16) derart in die Transportbahn der Artikel eingreift, dass ein mit der Trenneinheit (16) erfasster Artikel sowie die sich daran anschließenden weiteren Artikel während ihrer Vorwärtsbewegung längs zur Transportrichtung (T) von der Trenneinheit (16) wenigstens geringfügig verzögerbar sind, **dadurch gekennzeichnet, dass** die Trenneinheit (16) durch wenigstens zwei Elemente (161, 162) gebildet ist, durch welche der in Transportrichtung (T) zuvorderst angeordnete Artikel an mindestens zwei Seiten umgreifbar und in seiner Position in Bezug auf die Transportebene der sich bewegenden Fördereinrichtung fixierbar ist, wobei ein Halteelement (161) für den in Transportrichtung (T) an vorderster Stelle liegenden ersten Artikel einer Anzahl von gruppierten Artikeln eine längs zur Transportbahn wirksame Anlagefläche bildet und wobei ein Zentrierelement (162) für den in Transportrichtung (T) an vorderster Stelle liegenden ersten Artikel einer Anzahl von gruppierten Artikeln eine quer zur Transportbahn wirksame Anlagefläche bildet.

10. Vorrichtung nach Anspruch 9, **dadurch gekennzeichnet, dass** das Halteelement (161) und das Zentrierelement (162) auf einem gemeinsamen Trägerelement der Trenneinheit (16) fixiert sind.

11. Vorrichtung nach Anspruch 9 oder 10, **dadurch gekennzeichnet, dass** die Trenneinheit (16) mit dem Halteelement (161) und dem Zentrierelement (162) von unterhalb der Transportbahn und im Wesentlichen senkrecht zur Transportbahn nach oben zwischen benachbarte Artikel einschiebbar sind.

12. Vorrichtung nach einem der Ansprüche 9 bis 11, **dadurch gekennzeichnet, dass** die Trenneinheit (16) eine zumindest zeitweise gegenüber der Transportbahn verzögerte Bewegungsbahn aufweist.

13. Vorrichtung nach einem der Ansprüche 9 bis 12, **dadurch gekennzeichnet, dass** die Trenneinheit (16) zumindest kurzzeitig eine gegenüber der Transportbahn beschleunigte Bewegungsbahn aufweist.

14. Vorrichtung nach einem der Ansprüche 9 bis 13, **dadurch gekennzeichnet, dass** eine erste Gruppe (141) von gruppierten Artikeln mittels der ersten Trenneinheit (16) in Transportrichtung (T) zumindest kurzzeitig über die Fördergeschwindigkeit der Transportbahn beschleunigbar und von der mittels einer nachfolgenden zweiten Trenneinheit (16) nachfolgenden zweiten Gruppe (142) von gruppierten Artikeln separierbar ist.

## Claims

1. Method for grouping articles arranged in at least one closed row on a conveying device, said articles being transported in one plane of transport and spaced groupwise at intervals from each other for further treatment, wherein at least one separating unit (16) is inserted in parallel to the transportation direction (T) into the transport track along which the articles are moved and engages with the articles in such a manner that an article engaged by said separating unit (16) and further subsequent articles are at least slightly decelerated by the separating unit (16) in their forward movement lengthwise to the direction of transportation (T), said method **characterized in that** the separating unit (16) is formed by at least two elements (161, 162) that encompass the foremost article in transportation direction (T) on at least two sides and secure the article in its position in relation to the plane of transport of the moving conveying device.

2. Method according to claim 1, **characterized in that** a retaining element (161) forms a contact surface being effective lengthwise to the transport track for the foremost article in transportation direction (T) of a number of grouped articles, and **in that** a centering element (162) forms a contact surface being effective transverse to the transport track for the same article.

3. Method according to claim 2, **characterized in that** the separating unit (16) is inserted with the retaining element (161) and the centering element (162) between adjacent articles from underneath the transport track upward and essentially in perpendicular to the transport track.

4. Method according to one of the claims 1 to 3, **characterized in that** the separating unit (16) is, at least sectionwise, moved decelerated in relation to the transport track.

5. Method according to one of the claims 1 to 4, **characterized in that** the separating unit (16) is, at least for a short duration, moved accelerated in relation to the transport track and moves faster than said transport track.

6. Method according to one of the claims 1 to 5, **characterized in that** a first group (141) of grouped articles is, at least for a short duration, accelerated above the conveying speed of the transport track in transportation direction (T) by means of the first separating unit (16) and separated from the following second group (142) of grouped articles by means of a following second separating unit (16).

7. Method according to one of the claims 1 to 6 wherein the last article in a group of articles (141) is shifted in a direction of movement (B) by an emerging retaining element (161) of a second separating unit (16).

8. Method according to claim 7 wherein after the retaining element (161) emerges, it forms a contact surface for the first article in a second group (142) of articles.

9. Device for grouping articles arranged in at least one closed row on a conveying device, said articles being transported in one plane of transport and spaced groupwise at intervals from each other for further treatment, wherein at least one separating unit (16) is inserted in parallel to the transportation direction (T) into the transport track along which the articles are moved and engages with the articles in such a manner that an article engaged by said separating unit (16) and further subsequent articles are at least slightly decelerated by the separating unit (16) in their forward movement lengthwise to the direction of transportation (T), said device **characterized in that** the separating unit (16) is formed by at least two elements (161, 162), which can encompass the foremost article in transportation direction (T) on at least two sides and which can secure the article in its position in relation to the plane of transport of the moving conveying device, wherein a retaining element (161) forms a contact surface being effective lengthwise to the transport track for the foremost, first article in transportation direction (T) of a number of grouped articles, and wherein a centering element (162) forms a stop/contact surface being effective transverse to the transport track for the foremost, first article in transportation direction (T) of a number of grouped articles.

10. Device according to claim 9, **characterized in that** the retaining element (161) and the centering element (162) are fastened on a common bearer element of the separating unit (16).

11. Device according to claim 9 or 10, **characterized in that** the separating unit (16) can be inserted with the retaining element (161) and the centering element (162) between adjacent articles from underneath the transport track upward and essentially in perpendicular to the transport track.

12. Device according to one of the claims 9 to 11, **characterized in that** the separating unit (16) possesses a trajectory that is, at least temporarily, decelerated in relation to the transport track.

13. Device according to one of the claims 9 to 12, **characterized in that** the separating unit (16) possesses, at least for a short duration, a trajectory that is accelerated in relation to the transport track.

14. Device according to one of the claims 9 to 13, **characterized in that** a first group (141) of grouped articles can, at least for a short duration, be accelerated above the conveying speed of the transport track in transportation direction (T) by means of the first separating unit (16) and can be separated from the following second group (142) of grouped articles by means of a following second separating unit (16).

## Revendications

1. Procédé de groupement d'articles qui sont transportés en au moins une rangée fermée sur un dispositif convoyeur dans un plan de transport et sont espacés par groupes afin de poursuivre le traitement, dans lequel au moins une unité de séparation (16) est introduite et s'engage parallèlement à la direction de transport (T) dans le chemin de transport des articles de telle manière qu'un article saisi par ladite unité de séparation (16) ainsi que les autres articles qui suivent celui-ci sont ralentis au moins légèrement durant leur avancement le long de la direction de transport (T) par ladite unité de séparation (16), **caractérisé par le fait que** ladite unité de séparation (16) est constituée par au moins deux éléments (161, 162) qui embrassent, sur au moins deux faces, l'articule le tout premier dans la direction de transport (T) et le fixent dans sa position par rapport au plan de transport du dispositif convoyeur en mouvement.

2. Procédé selon la revendication 1, **caractérisé par le fait qu'**un élément de maintien (161) forme une surface d'appui efficace le long du chemin de transport, pour le premier article d'un nombre d'articles regroupés, qui est situé en toute première position dans la direction de transport (T), et qu'un élément de centrage (162) forme une surface d'appui efficace transversalement au chemin de transport, pour cet même article.

3. Procédé selon la revendication 2, **caractérisé par le fait que** ladite unité de séparation (16) avec ledit élément de maintien (161) et ledit élément de centrage (162) est introduite d'en bas du chemin de transport et pour l'essentiel perpendiculairement au chemin de transport vers le haut entre des articles adjacents.

4. Procédé selon l'une quelconque des revendications 1 à 3, **caractérisé par le fait que** ladite unité de séparation (16) est déplacée par rapport au chemin de transport au moins par sections de façon ralentie.

5. Procédé selon l'une quelconque des revendications 1 à 4, **caractérisé par le fait que** ladite unité de séparation (16) est accélérée au moins pour une courte durée par rapport au chemin de transport et déplacée plus vite que celui-ci.

6. Procédé selon l'une quelconque des revendications 1 à 5, **caractérisé par le fait qu'**un premier groupe (141) d'articles regroupés est accéléré au moyen de la première unité de séparation (16), dans la direction de transport (T), au moins pour une courte durée, au-delà de la vitesse de transport du chemin de transport et est séparé du deuxième groupe (142) d'articles regroupés qui le suit au moyen d'une deuxième unité de séparation (16) suivante.

7. Procédé selon l'une quelconque des revendications 1 à 6, dans lequel, par une émergence d'un élément de maintien (161) d'une deuxième unité de séparation (16), le dernier article d'un groupe d'articles (141) est déplacé dans une direction de mouvement (B).

8. Procédé selon la revendication 7, dans lequel ledit élément de maintien (161), après avoir émergé, forme une surface d'appui pour un premier article d'un deuxième groupe (142) d'articles.

9. Dispositif de groupement d'articles qui sont transportés en au moins une rangée fermée sur un dispositif convoyeur dans un plan de transport et sont espacés par groupes afin de poursuivre le traitement, dans lequel au moins une unité de séparation (16) s'engage parallèlement à la direction de transport (T) dans le chemin de transport des articles de telle manière qu'un article saisi par ladite unité de séparation (16) ainsi que les autres articles qui suivent celui-ci peuvent être ralentis au moins légèrement durant leur avancement le long de la direction de transport (T) par l'unité de séparation (16), **caractérisé par le fait que** ladite unité de séparation (16) est constituée par au moins deux éléments (161, 162) par lesquels l'articule le tout premier dans la direction de transport (T) peut être embrassé sur au moins deux faces et peut être fixé dans sa position par rapport au plan de transport du dispositif convoyeur en mouvement, un élément de maintien (161) formant une surface d'appui efficace le long du chemin de transport, pour le premier article d'un nombre d'articles regroupés, qui est situé en toute première position dans la direction de transport (T), et un élément de centrage (162) formant une surface d'appui efficace transversalement au chemin de transport, pour ledit premier article d'un nombre d'articles regroupés, qui est situé en toute première position dans la direction de transport (T).

10. Dispositif selon la revendication 9, **caractérisé par le fait que** ledit élément de maintien (161) et ledit élément de centrage (162) sont fixés sur un élément support commun de ladite unité de séparation (16).

11. Dispositif selon la revendication 9 ou 10, **caractérisé par le fait que** ladite unité de séparation (16) avec ledit élément de maintien (161) et ledit élément de centrage (162) peuvent être introduits d'en bas du chemin de transport et pour l'essentiel perpendiculairement au chemin de transport vers le haut entre des articles adjacents.

12. Dispositif selon l'une quelconque des revendications 9 à 11, **caractérisé par le fait que** ladite unité de séparation (16) présente un trajet de mouvement qui est ralenti au moins par moments par rapport au chemin de transport.

13. Dispositif selon l'une quelconque des revendications 9 à 12, **caractérisé par le fait que** ladite unité de séparation (16) présente, au moins pour une courte durée, un trajet de mouvement accéléré par rapport au chemin de transport.

14. Dispositif selon l'une quelconque des revendications 9 à 13, **caractérisé par le fait qu'**un premier groupe (141) d'articles regroupés peut être accéléré au moyen de la première unité de séparation (16), dans la direction de transport (T), au moins pour une courte durée, au-delà de la vitesse de transport du chemin de transport et peut être séparé du deuxième groupe (142) d'articles regroupés qui le suit au moyen d'une deuxième unité de séparation (16) suivante.
